# EUROPEAN PATENT APPLICATION

(11) **EP 4 421 941 A1**
(43) Date of publication of application: **28.08.2024**
(21) Application number: 22891841.3
(22) Date of filing: 01.11.2022
(51) Int. Cl.: H01M 10/0587

(54) **CELL WINDING PROCESS, CELL WINDING APPARATUS, CELL, BATTERY, AND ELECTRIC APPARATUS**

(30) Priority: 11.11.2021 CN 202111335028
(71) Applicant: Contemporary Amperex Technology Co., Limited, Ningde, Fujian 352100 (CN)
(72) Inventor: OUYANG, Meilan, Ningde, Fujian 352100 (CN); ZHANG, Xiaowen, Ningde, Fujian 352100 (CN)
(74) Representative: Gong, Jinping
(86) International application number: PCT/CN2022/128835
(87) International publication number: WO 2023/083045

(57) **Abstract**

The present application relates to a cell winding process, a cell winding device, a cell, a battery, and a power consuming device. A heating portion (271) is arranged to heat a separator layer (24), such that a PCS polymer of the separator layer (24) is melted at a high temperature, to bond a cathode electrode plate (25) to an anode electrode plate (26), and the cathode electrode plate (25) is thus closely bonded and fixed to the anode electrode plate (26), thereby preventing the electrode plates from being retracted due to stress release after winding, which otherwise results in a gap. Therefore, the problem of lithium precipitation on an anode surface caused by a too long lithium ion transport path during charging and discharging can be prevented, and the safety performance of the battery can be further improved.

## Description

### Cross-Reference to Related Application

The present application refers to Chinese patent application No. 202111335028.7, filed on November 11, 2021 and entitled "CELL WINDING PROCESS, CELL WINDING DEVICE, CELL, BATTERY, AND POWER CONSUMING DEVICE", which is incorporated herein by reference in its entirety.

### Technical Field

The present application relates to the technical field of lithium-ion batteries, and in particular, to a cell winding process, a cell winding device, a cell, a battery, and a power consuming device.

### Background Art

Lithium-ion batteries are increasingly being used in the market due to their advantages of high energy density, high output power, long cycle life, low environmental pollution, etc.

The lithium-ion battery includes a wound battery, which is a battery composed of cells formed in a wound manner. Compared with a flat battery, the wound battery is formed by winding electrode plates with a thickness of only about 1 mm at a high pressure. By special technological means, the battery has the characteristics of super high-rate discharge capacity, excellent high- and low-temperature performance, stable high output voltage, higher energy density, etc.

However, when the wound battery is wound at a high pressure, a gap is likely to occur between bent portions of a cathode electrode plate and an anode electrode plate to cause lithium precipitation. In addition, if a material drops from the bent portions, the lithium precipitation is further aggravated, and there will be a safety hazard of short circuit inside the battery.

### Summary of the Invention

Based on this, it is necessary to provide a cell winding process, a cell winding device, a cell, a battery, and a power consuming device, in order to solve the problem in the prior art of a gap being likely to occur between a cathode electrode plate and an anode electrode plate of a wound battery to cause lithium precipitation.

In a first aspect, the present application provides a cell winding process, including:
a rolling-up step in which starting ends of a separator layer, a cathode electrode plate, and an anode electrode plate are fixed to a winding device configured to wind a cell, and the separator layer is placed between the cathode electrode plate and the anode electrode plate;
a heating step in which a heating portion is arranged on the winding device, and the heating portion heats heated regions on two surfaces of the separator layer that are respectively attached to the cathode electrode plate and the anode electrode plate; and
a winding step in which a winding needle is arranged on the winding device, and the heated separator layer, the cathode electrode plate, and the anode electrode plate are wound by means of the winding needle.

In the technical solution of the embodiment of the present application, since the separator layer is located between the cathode electrode plate and the anode electrode plate, the heated regions on the two surfaces of the separator layer that respectively face the cathode electrode plate and the anode electrode plate are heated, so that a polycarbosilane (PCS) polymer of the separator layer is melted and then wound, and the cathode electrode plate and the anode electrode plate can thus be closely bonded to the separator layer.

In this way, the cathode electrode plate can be bonded and fixed to the anode electrode plate by means of the structure of the separator layer itself, without the need to add other bonding structures. This can simplify the structure of the cell to the greatest extent and reduce the thickness of the wound cell and the volume of the cell.

In some embodiments, in the heating step, each heated region is located on a side edge of the separator layer parallel to a winding direction, and the width of the heated region ranges from 2 mm to 4 mm.

In the technical solution of the embodiment of the present application, if a heating width is less than 2 mm, a bonding width is too small, resulting in a poor effect of bonding the cathode electrode plate and the anode electrode plate to the separator layer, making it impossible to fix the cathode electrode plate and the anode electrode plate. If the heating width is greater than 4 mm, intercalation and deintercalation of lithium ions in a bonding region are affected, thus deteriorating the performance of the cell.

In some embodiments, in the heating step, each heated region is located on a side edge of the separator layer parallel to a winding direction, and the length of the heated region is at least three turns.

In the technical solution of the embodiment of the present application, if a heating length is less than three turns, the cathode electrode plate and the anode electrode plate cannot be effectively bonded to the separator layer, and a fixing effect cannot be achieved.

In some embodiments, in the heating step, a heating temperature of the heating portion is 90°C to 130°C.

In the technical solution of the embodiment of the present application, if the heating temperature is greater than 130°C, the melting of the separator layer is likely to lead to blockage of original micropores in the separator layer, affecting the transfer of lithium ions during charging and discharging, and thus deteriorating resistance, capacity, cycle and other properties of the battery. If the heating temperature is less than 90°C, the PCS polymer of the separator layer cannot be melted, and a bonding and fixing effect cannot be achieved.

In some embodiments, after the winding step, the method further includes:
a pre-pressing step in which a cell is obtained after the winding step is completed, the winding needle is pulled out from the cell, and a pressure is applied for pre-pressing to shape and bind the electrode plates of the cell.

In the technical solution of the embodiment of the present application, after the winding needle is pulled out from the cell upon the completion of the winding, the multiple layers of electrode plates will be retracted due to stress release. In order to avoid the above situation, a proper pressure is applied to the wound cell for pre-pressing, which can achieve a shaping and binding effect and improve the performance of the cell.

In some embodiments, the winding device includes a plurality of winding rollers configured to transport the separator layer, and all the winding rollers are arranged spaced apart from each other in a conveying direction of the separator layer.

In the technical solution of the embodiment of the present application, the separator layer, the cathode electrode plate and the anode electrode plate can be conveyed and transferred by means of the plurality of winding rollers.

In some embodiments, in the heating step, the heating portion is arranged on one of the plurality of winding rollers that is close to the winding needle.

In the technical solution of the embodiment of the present application, the heating portion is arranged on the winding roller close to the winding needle, so that the heating temperature at the separator layer can be ensured, and the failure of bonding and fixation caused by cooling can be avoided.

In a second aspect, the present application provides a cell winding device configured to operate the cell winding process described above, the cell winding device including a winding device configured to wind a cell. A heating portion is arranged on the winding device, to heat heated regions on two surfaces of a separator layer that are respectively attached to a cathode electrode plate and an anode electrode plate.

In some embodiments, the heating portion is located at an edge of the separator layer parallel to a winding direction, and has a heating width ranging from 2 mm to 4 mm.

In some embodiments, the heating portion is located at an edge of the separator layer parallel to a winding direction, and has a heating length of at least three turns.

In some embodiments, a heating temperature of the heating portion ranges from 90°C to 130°C.

In some embodiments, the winding device includes a plurality of winding rollers configured to transport the separator layer, and all the winding rollers are arranged spaced apart from each other in a conveying direction of the separator layer.

In some embodiments, the heating portion is arranged on one of the plurality of winding rollers that is close to the winding needle.

In a third aspect, the present application provides a cell, which is prepared by means of a cell winding process described above.

In a fourth aspect, the present application provides a battery, including a housing, and a cell described above. The cell is arranged in the housing.

In a fifth aspect, the present application provides a power consuming device, including a power consuming body, and a battery described above.

According to the cell winding process, the cell winding device, the cell, the battery, and the power consuming device described above, the separator layer is heated by the heating portion, such that the PCS polymer of the separator layer is melted at a high temperature, to bond the cathode electrode plate to the anode electrode plate, and the cathode electrode plate is thus closely bonded and fixed to the anode electrode plate, thereby preventing the electrode plates from being retracted due to stress release after winding, which otherwise results in a gap. Therefore, the problem of lithium precipitation on an anode surface caused by a too long lithium ion transport path during charging and discharging can be prevented, and the safety performance of the battery can be further improved.

The above description is only an overview of the technical solutions of the present application. To more clearly understand the technical means of the present application to implement the same according to the contents of the description, and to make the above and other objectives, features, and advantages of the present application more obvious and understandable, specific implementations of the present application are exemplarily described below.

### Brief Description of the Drawings

Various other advantages and benefits will become apparent to those of ordinary skill in the art upon reading the following detailed description of implementations. The accompanying drawings are merely for the purpose of illustrating the implementations, and are not to be construed as limiting the present application. Moreover, like components are denoted by like reference signs throughout the accompanying drawings. In the drawings:
FIG. 1 is a schematic structural diagram of a vehicle according to an embodiment of the present application;
FIG. 2 is a schematic structural diagram of a battery according to an embodiment of the present application;
FIG. 3 is a schematic structural diagram of a cell according to an embodiment of the present application;
FIG. 4 is a schematic structural diagram of a cell according to an embodiment of the present application;
FIG. 5 is a schematic structural diagram of the cell shown in FIG. 4 during winding; and
FIG. 6 is a schematic structural diagram of a separator layer of the cell shown in FIG. 4.

1000. Vehicle; 100. Battery; 200. Controller; 300. Motor; 10. Case; 20. Cell; 11. First portion; 12. Second portion; 21. End cap; 22. Housing; 23. Cell assembly; 24. Separator layer; 25. Cathode electrode plate; 26. Anode electrode plate; 27. Winding device; 21a. Electrode terminal; 23a. Tab; 241. Heated region; 271. Heating portion; 272. Winding needle; 273. Winding roller.

### Detailed Description of Embodiments

Embodiments of the technical solutions of the present application are described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "include/comprise" and "has/have" and any variations thereof in the description and the claims of the present application as well as the brief description of the drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist. For example, A and/or B may include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientations or positional relationships indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships shown in the accompanying drawings, are merely intended to facilitate and simplify the description of the embodiments of the present application, rather than indicating or implying that the device or element referred to must have a particular orientation or be constructed and operated in a particular orientation, and therefore cannot be construed as limiting the embodiments of the present application.

In the description of the embodiments of the present application, unless otherwise explicitly specified and defined, the technical terms such as "mount", "connected", "connect", and "fix" should be understood in a broad sense, for example, they may be a fixed connection, a detachable connection, or an integrated connection; may be a mechanical connection or an electrical connection; or may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

At present, from the perspective of the development of the market situation, lithium-ion batteries are widely used in electric vehicles and consumer electronics because of their advantages of high energy density, high output power, long cycle life, low environmental pollution, etc. With the continuous expansion of the application field of lithium-ion batteries, the market demand for the lithium-ion batteries is also expanding.

A process of producing a lithium-ion battery generally includes the following steps. In a first step of preparing electrode slurries, mainly an electrode active material, a binder, a solvent, etc. are mixed together and are fully stirred and dispersed to form each slurry. In a second step of coating, the slurries prepared in the first step are each uniformly coated onto a current collector (an aluminum foil, a copper foil, etc.) with a specified thickness, and the solvent is dried. In a third step of punching electrode plates, the electrode plates manufactured in the previous step are punched into specified sizes and shapes. In a fourth step of stacking, a cathode electrode plate, an anode electrode plate, and a separator are assembled together, and a cell is formed after gluing is completed. In a fifth step of assembling a pouch battery, the cell produced in the previous step is mounted into a punched aluminum-plastic film, and top sealing, side sealing, etc. are completed (with an electrolyte injection port reserved) to form a pouch battery without electrolyte injection. In a sixth step of injecting an electrolyte, a specified amount of electrolyte is injected into the pouch cell. In a seventh step of sealing the battery, a gas inside the cell is pumped out in a vacuum environment to complete the sealing.

Further, as lithium-ion batteries fall into wound batteries and flat batteries, a winding step is further provided in the above stacking step for the wound battery. The cathode electrode plate and the anode electrode plate are attached to the separator, and winding is then performed to form the wound battery. Next, assembly is performed.

The wound battery is made by winding electrode plates with a thickness of only about 1 millimeter (mm) at a high pressure, and is made by special technological means. Therefore, compared with the flat plate battery, the wound battery has the following characteristics: 1. super high-rate discharge capacity; 2. excellent high- and low-temperature performance; 3. stable high output voltage; 4. higher energy density; 5. excellent anti-vibration performance; and 6. capability of being charged quickly and longer service life. As a result, wound batteries have been increasingly widely used in the market.

With the widespread use of wound batteries, people's requirements for the performance of the wound batteries are also increasing. In order to facilitate use, people require the wound batteries to have a higher energy density and a smaller volume. Based on this, when the winding of the wound battery is completed, a pressure during pressing will be greater.

However, the applicant has found that as the pressure during pressing continuously increases, a bending angle of a bent portion of the wound battery becomes smaller. As a result, the bending angle of the bent portion of each of the cathode electrode plate and the anode electrode plate becomes smaller, greatly increasing the probability of a coating falling off at the bent portions of the cathode electrode plate and the anode electrode plate, and thus increasing the risk of lithium precipitation of the battery.

Further, the applicant has noticed that the separator layer is provided with a PCS polymer, which is specifically composed of PVDF, that is, polyvinylidene fluoride. This component melts at a certain temperature, and after melting, the separator layer will have a bonding effect. On this basis, the applicant has thought that if the PCS polymer of the separator layer is melted under a specific condition, the cathode electrode plate and the anode electrode plate can be bonded and fixed to each other by means of the polymer itself, which not only solves the bonding problem between the cathode electrode plate and the anode electrode plate, but also simplifies the structure of the wound battery without adding an external structure, thereby enabling the wound battery to have a smaller volume after being pressed.

Based on the above considerations, in order to solve the problem of lithium precipitation caused by generation of a gap between bent portions of the cathode electrode plate and the anode electrode plate while reducing the volume of the wound battery, the applicant has designed a cell winding process through in-depth research, which reduces the volume of the wound battery and can solve the problem of lithium precipitation and short circuit of the wound battery by means of the structure of the separator layer itself and by special technological means.

The cell disclosed in the embodiment of the present application may be used in, but not limited to, a power consuming device such as a vehicle, a ship or an aircraft. A power supply system of the power consuming device may be composed of the cell, the battery, etc. disclosed in the present application. This contributes to bonding and fixing the cathode electrode plate to the anode electrode plate, prevents lithium precipitation caused by the occurrence of a gap between the cathode electrode plate and the anode electrode plate, prevents lithium precipitation on an anode surface caused by a too long lithium ion transport path during charging and discharging, and further improves the safety performance of the battery.

An embodiment of the present application provides a power consuming device using a battery as a power supply. The power consuming device may be, but is not limited to, a mobile phone, a tablet, a notebook computer, an electric toy, an electric tool, a battery cart, an electric vehicle, a ship, a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

In the following embodiments, for ease of illustration, an example in which a power consuming device according to an embodiment of the present application is a vehicle 1000 is taken for description.

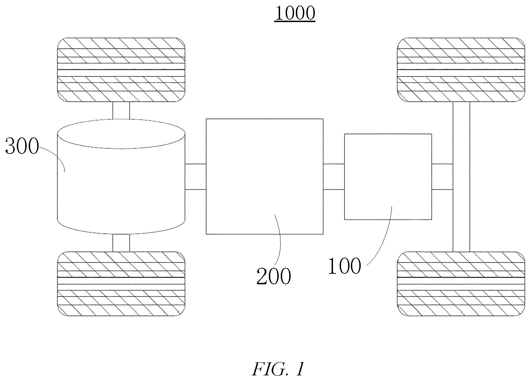

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be arranged at a bottom, a head or a tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 may not only serve as a power supply for operating the vehicle 1000, but also serve as a power supply for driving the vehicle 1000, in place of or partially in place of fuel or natural gas, to supply driving power to the vehicle 1000.

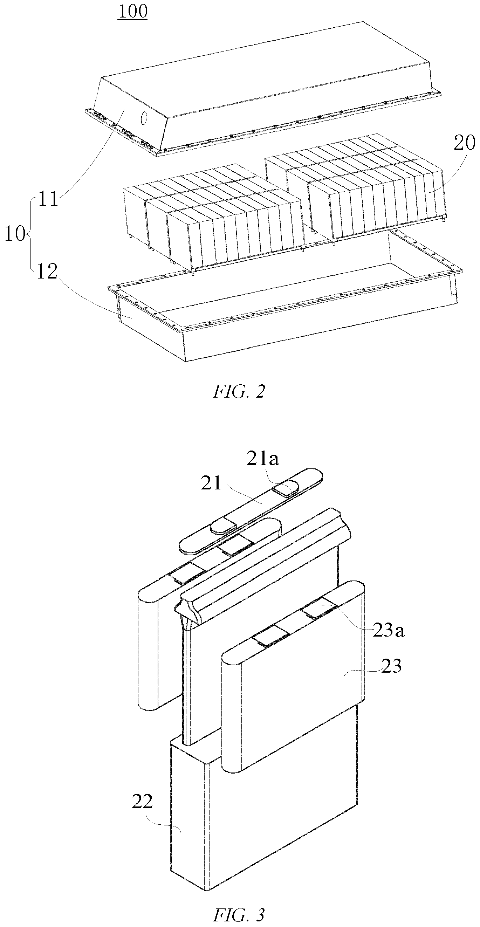

Referring to FIG. 2, FIG. 2 is a schematic structural diagram of a battery according to an embodiment of the present application. The battery 100 includes a case 10 and a cell 20. The cell 20 is accommodated in the case 10. The case 10 is configured to provide an accommodating space for the cell 20, and the case 10 may be of various structures. In some embodiments, the case 10 may include a first portion 11 and a second portion 12. The first portion 11 and the second portion 12 are fitted to each other in a covering manner. The first portion 11 and the second portion 12 jointly define an accommodating space for accommodating the cell 20. The second portion 12 may be of a hollow structure with one end open, the first portion 11 may be of a plate-like structure, and the first portion 11 covers an open side of the second portion 12 such that the first portion 11 and the second portion 12 jointly define the accommodating space. Alternatively, the first portion 11 and the second portion 12 each may be of a hollow structure with one side open, and the open side of the first portion 11 covers the open side of the second portion 12. Of course, the case 10 formed by the first portion 11 and the second portion 12 may be in various shapes such as a cylinder and a cuboid.

In the battery 100, a plurality of cells 20 may be provided. The plurality of cells 20 may be connected in series or in parallel or in series-parallel. The series-parallel connection means that some of the plurality of cells 20 are in series connection and some are in parallel connection. The plurality of cells 20 may be directly connected to each other in series or in parallel or in series-parallel, and then a whole composed of the plurality of cells 20 is accommodated in the case 10. Of course, the battery 100 may also be accommodated in the case 10 as a whole that is formed by firstly connecting a plurality of cells 20 in series or in parallel or in series-parallel to form a plurality of battery modules, and then connecting the plurality of battery modules in series or in parallel or in series-parallel. The battery 100 may further include other structures. For example, the battery 100 may further include a bus component configured to implement electrical connections between the plurality of cells 20.

Referring to FIG. 3, FIG. 3 is a schematic structural diagram of a cell according to an embodiment of the present application. Each cell 20 may be a secondary battery or a primary battery; or may be a lithium-sulfur battery, a sodium-ion battery, or a magnesium-ion battery, but is not limited thereto. The cell 20 may be in a cylindrical shape, a flat shape, a cuboid shape, or another shape. Specifically, the cell 20 refers to a smallest unit of a battery. The cell 20 includes an end cap 21, a housing 22, a cell assembly 23 and other functional components.

The end cap 21 refers to a component that covers an opening of the housing 22 to isolate an internal environment of the cell 20 from an external environment. Without limitation, the end cap 21 may be shaped to adapt to the shape of the housing 22 so as to mate with the housing 22. Optionally, the end cap 21 may be made of a material (for example, an aluminum alloy) with a certain hardness and strength. In this way, the end cap 21 is less prone to deformation when subjected to compression and collision, so that the cell 20 can have a higher structural strength and the safety performance can also be improved. Functional components, such as electrode terminals 21a, may be arranged on the end cap 21. The electrode terminals 21a may be configured to be electrically connected to the cell assembly 23, so as to output or input electric energy for the cell 20. In some embodiments, a pressure relief mechanism, which is configured to release an internal pressure when the internal pressure or temperature of the cell 20 reaches a threshold, may be further provided on the end cap 21. The end cap 21 may be made of various materials, such as copper, iron, aluminum, stainless steel, an aluminum alloy, and plastic, which is not specifically limited in the embodiments of the present application. In some embodiments, an insulating member may be further provided on an inner side of the end cap 21. The insulating member may be used to isolate electrical connection components in the housing 22 from the end cap 21 in order to reduce the risk of short circuit. For example, the insulating member may be made of plastic, rubber, etc.

The housing 22 is an assembly configured to cooperate with the end cap 21 to form the internal environment of the cell 20. The formed internal environment may be used to accommodate the cell assembly 23, an electrolyte, and other components. The housing 22 and the end cap 21 may be separate components, and the housing 22 may be provided with an opening, at which the end cap 21 covers the opening to form the internal environment of the cell 20. Without limitation, the end cap 21 and the housing 22 may also be integrated with each other. Specifically, the end cap 21 and the housing 22 may form a common connection face before other components are inserted into the housing. When the interior of the housing 22 needs to be packaged, the end cap 21 then covers the housing 22. The housing 22 may have various shapes and various sizes, for example, in the shape of a cuboid, a cylinder, a hexagonal prism, etc. Specifically, the housing 22 may be shaped depending on the specific shape and size of the cell assembly 23. The housing 22 may be made of various materials, such as copper, iron, aluminum, stainless steel, an aluminum alloy, and plastic, which is not specially limited in the embodiments of the present application.

The cell assembly 23 is a component in the cell 20 where an electrochemical reaction takes place. The housing 22 may contain one or more cell assemblies 23. The cell assembly 23 is mainly formed by winding or stacking a cathode electrode plate and an anode electrode plate, and is typically provided with a separator between the cathode electrode plate and the anode electrode plate. Portions of the cathode electrode plate and the anode electrode plate that each have an active material form a main body portion of the cell assembly 23, and portions of the cathode electrode plate and the anode electrode plate that have no active material each form a tab 23a. A cathode tab and an anode tab may be located at one end of the main body portion together or at two ends of the main body portion respectively. During charging/discharging of the battery, the cathode active material and the anode active material react with the electrolyte, and the tabs 23a are connected to the electrode terminals 21a to form a current loop.

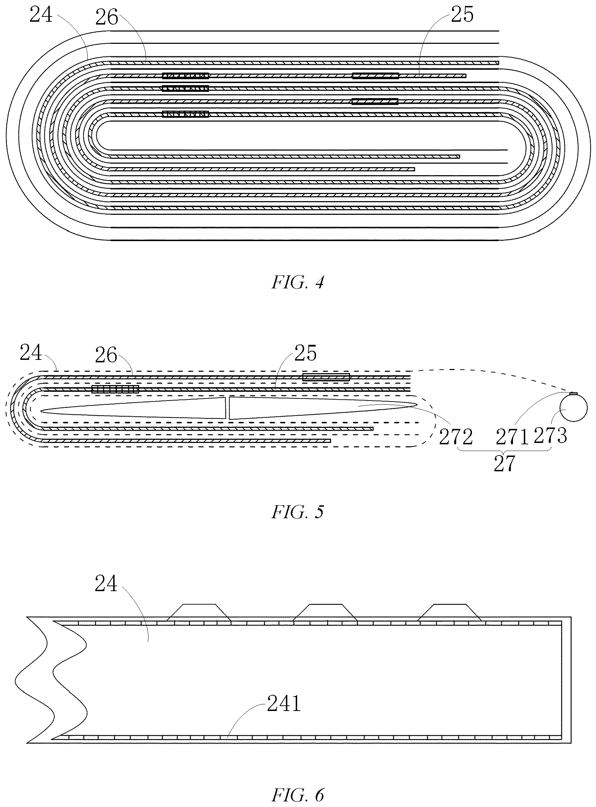

Referring to FIGS. 4, 5 and 6, an embodiment of the present application provides a cell winding process, including the following steps.

In a rolling-up step S10, starting ends of a separator layer 24, a cathode electrode plate 25, and an anode electrode plate 26 are fixed to a winding device 27 configured to wind a cell, and the separator layer 24 is placed between the cathode electrode plate 25 and the anode electrode plate 26.

In a heating step S20, a heating portion 271 is arranged on the winding device 27, and the heating portion 271 heats heated regions 241 on two surfaces of the separator layer 24 that are respectively attached to the cathode electrode plate 25 and the anode electrode plate 26.

Since the separator layer 24 is located between the cathode electrode plate 25 and the anode electrode plate 26, the heated regions 241 on the two surfaces of the separator layer 24 that respectively face the cathode electrode plate 25 and the anode electrode plate 26 are heated, so that a PCS polymer of the separator layer is melted and then wound, and the cathode electrode plate 25 and the anode electrode plate 26 can thus be closely bonded to the separator layer 24.

It should be noted that the heating portion 271 may be provided as a heating sheet, which is attached to the separator layer 24 by means of the winding device 27, so as to heat the separator layer 24. It may be understood that the heating portion 271 may alternatively be provided as another heating structure, such as a heating tube and an infrared heater, which is not described in detail herein.

In some embodiments, in the heating step, the heated region 241 is located on a side edge of the separator layer 24 parallel to a winding direction, and the width of the heated region 241 ranges from 2 mm to 4 mm.

Specifically, the heated region 241 is at an edge of the separator layer 24 and extends inwardly from the edge by 2 mm to 4 mm. In addition, two heated regions 241 are generally included, and are respectively located on two side edges of the separator layer 24, and each have a width of 2 mm to 4 mm. That is, a left edge and a right edge of the separator layer 24 are both heated, so that the cathode electrode plate 25 and the anode electrode plate 26 can be attached to the separator layer 24 more closely.

In addition, it has been experimentally verified that, if the width of the heated region 241 is less than 2 mm, a bonding width is too small, resulting in a poor effect of bonding the cathode electrode plate 25 and the anode electrode plate 26 to the separator layer 24, making it impossible to fix the cathode electrode plate 25 and the anode electrode plate 26. If the width of the heated region 241 is greater than 4 mm, intercalation and deintercalation of lithium ions in a bonding region are affected, thus deteriorating the performance of the cell.

In some embodiments, in the heating step, the length of the heated region 241 is at least three turns. That is, the heated region 241 on the separator layer 24 should enable the cathode electrode plate 25, the separator layer 24 and the anode electrode plate 26 to be jointly wound for at least three turns. If the length of the heated region 241 is less than three turns, the cathode electrode plate 25 and the anode electrode plate 26 cannot be effectively bonded to the separator layer, and a fixing effect cannot be achieved.

In addition, in the heating step, a heating temperature of the heating portion 271 ranges from 90°C to 130°C. Specifically, since the separator layer 24 is of a fibrous structure, several small through-holes are distributed in the separator layer, and the through-holes provide channels for transfer of lithium ions. If the heating temperature is greater than 130°C, the melting of the separator layer 24 is likely to lead to blockage of original micropores in the separator layer, affecting the transfer of lithium ions during charging and discharging, and thus deteriorating resistance, capacity, cycle and other properties of the battery. If the heating temperature is less than 90°C, the PCS polymer of the separator layer 24 cannot be melted, and a bonding and fixing effect cannot be achieved.

In a winding step S30, a winding needle 272 is arranged on the winding device 27, and the heated separator layer 24, the cathode electrode plate 25, and the anode electrode plate 26 are wound by means of the winding needle 272.

In a pre-pressing step S40, a cell is obtained after the winding step is completed, the winding needle 272 is pulled out from the cell, and a pressure is applied for pre-pressing to shape and bind the electrode plates of the cell.

Specifically, after the winding needle 272 is pulled out from the cell upon the completion of the winding, the multiple layers of electrode plates will be retracted due to stress release. In order to avoid the above situation, a proper pressure is applied to the wound cell for pre-pressing, which can achieve a shaping and binding effect and improve the performance of the cell.

In some embodiments, the winding device 27 in the aforementioned cell winding process includes a plurality of winding rollers 273 configured to convey the separator layer, and all the winding rollers 273 are arranged spaced apart from each other in a conveying direction of the separator layer 24. Specifically, in this embodiment, the separator layer 24, the cathode electrode plate 25, and the anode electrode plate 26 respectively correspond to the plurality of winding rollers 273. Since the separator layer 24, the cathode electrode plate 25, and the anode electrode plate 26 each have a large length before winding, it is necessary to convey and transfer the separator layer 24, the cathode electrode plate 25, and the anode electrode plate 26 by means of the plurality of winding rollers 273.

In some embodiments, the heating portion 271 is arranged on one winding roller 273 of the plurality of winding rollers 273 that is close to the winding needle 272. That is, the heating portion 271 is arranged on the winding roller 273 closest to the winding needle 272, so that the failure to fix the heated separator layer 24 due to cooling during conveying can be prevented.

Based on the same concept as the aforementioned cell winding process, the present application further provides a cell winding device configured to operate the aforementioned cell winding process, the cell winding device including a winding device 27 configured to wind a cell. A heating portion 271 is arranged on the winding device 27, to heat heated regions 241 on two surfaces of the separator layer 24 that are respectively attached to the cathode electrode plate 25 and the anode electrode plate 26.

Specifically, during winding of the cell, the separator layer 24 is placed between the cathode electrode plate 25 and the anode electrode plate 26 to isolate the cathode electrode plate 25 from the anode electrode plate 26. Further, the heated regions 241 on the two surfaces of the separator layer 24 that respectively face the cathode electrode plate 25 and the anode electrode plate 26 are heated, so that a PCS polymer of the separator layer is melted. Therefore, during the winding, the two side surfaces of the separator layer 24 that face the cathode electrode plate 25 and the anode electrode plate 26 are both adhesive. In this way, the cathode electrode plate 25 and the anode electrode plate 26 can be closely bonded to the separator layer 24 during the winding.

It should be noted that the heating portion 271 may be provided as a heating sheet, which is attached to the separator layer 24 by means of the winding device 27, so as to heat the separator layer 24. It may be understood that the heating portion 271 may alternatively be provided as another heating structure, such as a heating tube and an infrared heater, which is not described in detail herein.

In some embodiments, the heating portion 271 is located at an edge of the separator layer 24 parallel to a winding direction, and has a heating width of 2 mm to 4 mm.

Specifically, the edge of the separator layer 24 is heated by the heating portion 271, and the heating width is 2 mm to 4 mm. During the winding, edges of the cathode electrode plate 25 and the anode electrode plate 26 can be closely bonded to the separator layer 24, so that a fixed connection can be achieved. Moreover, the heating portion 271 heats two side edges of the separator layer 24 in the winding direction, and the heating widths on two sides each are 2 mm to 4 mm. In this way, it can be ensured that the two sides of the separator layer 24 both have bonding capabilities.

In addition, it has been experimentally verified that, if the heating width is less than 2 mm, a bonding width is too small, resulting in a poor effect of bonding the cathode electrode plate 25 and the anode electrode plate 26 to the separator layer 24, making it impossible to fix the cathode electrode plate 25 and the anode electrode plate 26. If the heating width is greater than 4 mm, intercalation and deintercalation of lithium ions in a bonding region are affected, thus deteriorating the performance of the cell.

In some embodiments, the heating length of the heating portion 271 is at least three turns. That is, the heating length of the heating portion 271 on the separator layer 24 should enable the cathode electrode plate 25, the separator layer 24, and the anode electrode plate 26 to be jointly wound for at least three turns. If the heating length is less than three turns, the cathode electrode plate 25 and the anode electrode plate 26 cannot be effectively bonded to the separator layer 24, and a fixing effect cannot be achieved.

In some embodiments, a heating temperature of the heating portion 271 ranges from 90°C to 130°C. Specifically, since the separator layer 24 is of a fibrous structure, several small through-holes are distributed in the separator layer, and the through-holes provide channels for transfer of lithium ions. If the heating temperature is greater than 130°C, the melting of the separator layer 24 is likely to lead to blockage of original micropores in the separator layer, affecting the transfer of lithium ions during charging and discharging, and thus deteriorating resistance, capacity, cycle and other properties of the battery. If the heating temperature is less than 90°C, the PCS polymer of the separator layer 24 cannot be melted, and a bonding and fixing effect cannot be achieved.

In some embodiments, the winding device 27 includes a plurality of winding rollers 273 configured to convey the separator layer 24, and all the winding rollers 273 are arranged spaced apart from each other in a conveying direction of the separator layer 24.

Specifically, the separator layer 24, the cathode electrode plate 25, and the anode electrode plate 26 respectively correspond to the plurality of winding rollers 273. Since the separator layer 24, the cathode electrode plate 25, and the anode electrode plate 26 each have a large length before winding, it is necessary to convey and transfer the separator layer 24, the cathode electrode plate 25, and the anode electrode plate 26 by means of the plurality of winding rollers 273.

In some embodiments, the heating portion 271 is arranged on one winding roller 273 of the plurality of winding rollers 273 that is close to the winding needle 272. That is, the heating portion 271 is arranged on the winding roller 273 closest to the winding needle 272, so that the failure to fix the heated separator layer 24 due to cooling during conveying can be prevented.

Based on the same concept as the aforementioned cell winding device, the present application further provides a cell, which can be prepared by means of the cell winding process described above.

Based on the same concept as the aforementioned cell, the present application further provides a battery, including a housing, and the cell described above. The cell is arranged in the housing.

Based on the same concept as the battery described above, the present application further provides a power consuming device, including a power consuming body, and the battery described above.

During specific use of the present application, a heating portion 271 is first arranged on one winding roller 273, which is closest to a winding needle 272, of the plurality of winding rollers 273 corresponding to the separator layer 24. The heating portion heats two sides of the edge of the separator layer 24, and the heating width range is set to 2 mm to 4 mm.

Next, the separator layer 24, a cathode electrode plate 25, and an anode electrode plate 26 are respectively fixed to corresponding winding rollers 273, and the separator layer 24, the cathode electrode plate 25, and the anode electrode plate 26 are respectively transferred to the winding needle 272 by means of guidance of the winding rollers 273. In this process, it is necessary to keep the separator layer 24 between the cathode electrode plate 25 and the anode electrode plate 26.

After the separator layer 24, the cathode electrode plate 25, and the anode electrode plate 26 are fixed, a rolling-up step can be started. In addition, the heating temperature of the heating portion 271 is controlled at 90°C-130°C, and the separator layer 24 is heated synchronously during winding. The heated separator layer 24 is bonded to the cathode electrode plate 25 and the anode electrode plate 26 respectively during the winding, so as to achieve a fixing effect.

After the winding of the cell is completed, the winding needle 272 is pulled out from the cell, and a certain pressure is applied to pre-press the cell. In this way, an effect of shaping and binding the electrode plates of the cell can be achieved, and a gap between the electrode plates can be prevented from becoming larger during production.

The cell winding process, the cell winding device, the cell, the battery, and the power consuming device in the above embodiments have at least the following advantages.
1. The separator layer 24 is heated, such that the PCS polymer of the separator layer is melted to have a bonding function, to fix the cathode electrode plate 25 and the anode electrode plate 26, and the electrode plates are bonded and fixed by means of the structure of the separator layer 24 itself, thus achieving a simple operation process and high working efficiency.
2. Since the structure of the separator layer 24 itself is used to implement bonding, it is not necessary to add other bonding structures, the structure of the cell can be simplified to the greatest extent, and the thickness of the cell after winding can be reduced, thereby reducing the volume of the cell and improving the performance of the cell.
3. The wound cell is pre-pressed, so that retraction between the multiple layers of electrode plates due to stress release can be avoided after the winding needle 272 is pulled out from the cell, thus achieving an effect of shaping and binding the electrode plates of the cell and improving the performance of the cell.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A cell winding process, comprising:
a rolling-up step in which starting ends of a separator layer, a cathode electrode plate, and an anode electrode plate are fixed to a winding device configured to wind a cell, and the separator layer is placed between the cathode electrode plate and the anode electrode plate;
a heating step in which a heating portion is arranged on the winding device, and the heating portion heats heated regions on two surfaces of the separator layer that are respectively attached to the cathode electrode plate and the anode electrode plate; and
a winding step in which a winding needle is arranged on the winding device, and the heated separator layer, the cathode electrode plate, and the anode electrode plate are wound by means of the winding needle.

2. The cell winding process according to claim 1, wherein in the heating step, each heated region is located on a side edge of the separator layer parallel to a winding direction, and the width of the heated region ranges from 2 mm to 4 mm.

3. The cell winding process according to claim 1 or 2, wherein in the heating step, each heated region is located on a side edge of the separator layer parallel to a winding direction, and the length of the heated region is at least three turns.

4. The cell winding process according to any one of claims 1 to 3, wherein in the heating step, a heating temperature of the heating portion ranges from 90°C to 130°C.

5. The cell winding process according to any one of claims 1 to 4, after the winding step, further comprising:
a pre-pressing step in which a cell is obtained after the winding step is completed, the winding needle is pulled out from the cell, and a pressure is applied for pre-pressing to shape and bind the electrode plates of the cell.

6. The cell winding process according to any one of claims 1 to 5, wherein the winding device comprises a plurality of winding rollers configured to convey the separator layer, and all the winding rollers are arranged spaced apart from each other in a conveying direction of the separator layer.

7. The cell winding process according to claim 6, wherein in the heating step, the heating portion is arranged on one of the plurality of winding rollers that is close to the winding needle.

8. A cell winding device configured to operate a cell winding process according to any one of claims 1 to 7, the cell winding device comprising a winding device configured to wind a cell, wherein a heating portion is arranged on the winding device, to heat heated regions on two surfaces of a separator layer that are respectively attached to a cathode electrode plate and an anode electrode plate.

9. The cell winding device according to claim 8, wherein the heating portion is located at an edge of the separator layer parallel to a winding direction, and has a heating width ranging from 2 mm to 4 mm.

10. The cell winding device according to claim 8 or 9, wherein the heating portion is located at an edge of the separator layer parallel to a winding direction, and has a heating length of at least three turns.

11. The cell winding device according to any one of claims 8 to 10, wherein a heating temperature of the heating portion ranges from 90°C to 130°C.

12. The cell winding device according to any one of claims 8 to 11, wherein the winding device comprises a plurality of winding rollers configured to transport the separator layer, and all the winding rollers are arranged spaced apart from each other in a conveying direction of the separator layer.

13. The cell winding device according to claim 12, wherein the heating portion is arranged on one of the plurality of winding rollers that is close to a winding needle.

14. A cell prepared by means of a cell winding process according to any one of claims 1 to 7.

15. A battery, comprising a housing, and a cell according to claim 14, wherein the cell is arranged in the housing.

16. A power consuming device, comprising a power consuming body and a battery according to claim 15.
